# EUROPEAN PATENT SPECIFICATION

(11) **EP 0 653 482 B1**
(45) Date of publication and mention of the grant of the patent: **15.03.2000**
(21) Application number: 93203153.7
(22) Date of filing: 11.11.1993
(51) Int. Cl.: C11D 3/395, C11D 3/28, C01B 11/06

(54) **Hypochlorite bleaching compositions**
Hypochloritbleichmittelzusammensetzung
Composition de blanchiment à base d'hypochlorite

(43) Date of publication of application: 17.05.1995
(73) Proprietor: THE PROCTER & GAMBLE COMPANY, Cincinnati, Ohio 45202 (US)
(72) Inventor: Agostini, Francesco, I-20145 Milano (IT); Caire, Giuseppe, I-18100 Imperia (IT)
(74) Representative: Canonici, Jean-Jacques

(56) References cited:
- EP-A- 0 079 102
- EP-A- 0 266 904
- EP-A- 0 358 472
- WO-A-88/05461
- FR-A- 2 121 568

## Description

### Technical field

The present invention relates to a liquid bleaching composition which is suitable for laundry applications. More specifically, the compositions herein can be used in laundry applications as pre-wash bleaching compositions.

### Background of the invention

Liquid bleaching compositions are well known in the art. Amongst the different bleaching compositions available, those relying on bleaching by hypochlorite are often preferred, mainly for whiteness performance reasons. See, for example, WO-A-88-05461 which discloses an aqueous composition comprising hypochlorite, sodium carbonate and sodium hydroxide and the use of said composition for removing stains from the fabrics.

However, the drawbacks associated with the use of chlorine-based compositions are that said compositions may both damage and yellow fabrics.

It is therefore an object of the present invention to provide a hypochlorite-containing composition, suitable for use in laundry, whereby the yellowing of the fabrics is reduced or eliminated.

It is a further object of the present invention to provide a hypochlorite-containing composition, suitable for use in laundry, whereby fabric safety is improved.

It is another object of the present invention to provide a hypochlorite-containing composition, suitable for use in laundry, whereby the hypochlorite stability is improved.

We have now found that the presence of some metal ions such as Ni, Co, Cu, Mn, Pd, Pt, Cr, Hg, Ir, and Fe adversely affects both hypochlorite bleaching performance and stability. It is believed that in the washing environment said metal ions catalyze the attack of hypochlorite on fabrics with the generation of yellow oxidized species. Said metal ions also lead to reduced tensile strength of the fabrics, thereby reducing fabrics resistance. It is further believed that said metal ions are adsorbed per se on oxidized fabrics as colored species and catalyze the degradation of the brighteners adsorbed on fabrics generating thereby highly colored species on fabrics. Also, said metal ions stabilize colored pigments of enzymatic stains such as blood or grass. Furthermore, it is believed that said metal ions are detrimental for the performance of a hypochlorite composition as they tend to react with the hypochlorite present in said composition and thereby catalyze the decomposition of said hypochlorite.

Therefore we have found that it is essential that levels of said metal ions are controlled both in said composition as is and in the bleaching environment, thereby providing improved whiteness performance and safety to fabric and improved hypochlorite stability.

It has now been found that this can be achieved by formulating hypochlorite bleach compositions comprising a specific complexing agent or mixtures thereof selected from the group of polycarboxylic acid derivatives of pyridine or salts thereof. Said complexing agents are believed to be highly selective in binding the metal ions which are detrimental for both hypochlorite bleaching performance and stability.

We have also found that, in the preferred embodiment where the hypochlorite bleach compositions according to the present invention further comprise a Ca/Mg precipitation system, i.e. carbonate salts together with silicate salts, outstanding whiteness and fabric safety performance are provided. Indeed, it has surprisingly been found that the use of the specific complexing agent as herein defined, or mixtures thereof, together with said Ca/Mg precipitation system results in a synergistic effect on whiteness performance.

A further advantage of the compositions of the present invention is that in addition to their outstanding whitening action said compositions allow also good stain removal.

In the field of the dish washing compositions, EP -A-266 904 discloses compositions having a pH of from 7 to 12.5 which, among other ingredients, may comprise hypochlorite, from 5% to 50% by weight of the composition of pyridine derivatives as the builder, carbonate and silicate salts. No level of hypochlorite is disclosed.

FR-A-2 121 568 discloses detergent compositions comprising dicarboxylic heterocyclic acids. Hypochlorite-containing compositions are not disclosed therein.

### Summary of the invention

The present invention encompasses an aqueous liquid bleaching composition having a pH of from 11.5 to 14, suitable to be used in diluted form, comprising from 0.1% to 10% by weight of the total composition, based on active chlorine, of an alkali metal hypochlorite, and from 0.01% to 5% by weight of the total composition of a complexing agent, or mixtures thereof, selected from the group of polycarboxylic acid derivatives of pyridine or salts thereof having one of the formulae given hereinafter.

In a preferred embodiment, the compositions according to the present invention further comprise a Ca/Mg precipitation system, preferably carbonate salts together with silicate salts.

The present invention further encompasses a method of bleaching and washing fabrics, whereby fabric whiteness is improved and wherein an aqueous hypochlorite bleach composition having a pH of from 11.5 to 14 comprising a complexing agent or mixtures thereof as defined herein, is contacted with said fabrics. In a preferred embodiment, the compositions used in said method further comprise a Ca/Mg precipitation system, preferably carbonate salts together with silicate salts.

### Detailed Description of the invention

The compositions according to the present invention are stable aqueous bleaching compositions which comprise a complexing agent or mixtures thereof as herein defined.

By stable it is meant herein that the hypochlorite bleach composition of the present invention should not undergo more than 25 % loss of available chlorine after 7 days of storage at 50°C +/-0.5°C. The % loss of available chlorine may be measured using the method described, for instance, in "Analyses des Eaux et Extraits de Javel" by La chambre syndicale nationale de L'eau de Javel et des produits connexes, Pages 9-10 (1984). Said method consists in measuring the available chlorine in the fresh compositions, i.e. just after they are made, and in the same compositions after 7 days storage at 50°C.

As a first essential feature, the compositions of the present invention comprise hypochlorite. Various forms of alkali metal hypochlorite are commercially available. It is preferred herein to use sodium hypochlorite. Compositions according to the present invention comprise a bleaching amount of alkali metal hypochlorite, which typically represents from 0.1% to 10% by weight of the total composition, based on active chlorine, of alkali metal hypochlorite. Preferred compositions herein comprise from 3% to 6% of alkali metal hypochlorite.

As a second essential feature, the compositions according to the present invention comprise a complexing agent selected from the group of polycarboxylic acid of pyridine or salts thereof having one of the following formulas: 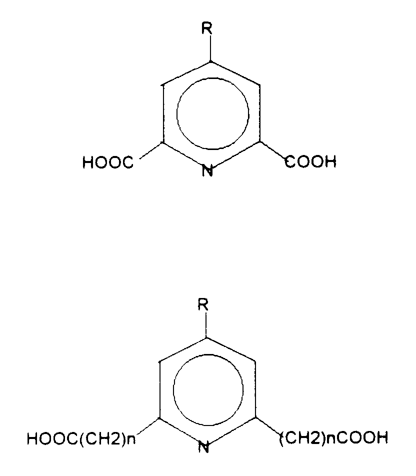 in which R is hydrogen, a halogen atom, a hydroxyl group, an amino group, a carboxylic group or a short-chain alkyl group (C1-C4) and n is 1 or 2. Preferred herein are the polycarboxylic acid derivatives of pyridine selected from the group of dipicolinic acid (2,6-pyridinedicarboxylic acid) and derivatives thereof obtained by substitution of the hydrogen in para position with, a halogen, a carboxylic group or a short-chain alkyl group (C1-C4). The compositions of the present invention comprise from 0.01% to 5% by weight of the total composition of a complexing agent selected from the group of polycarboxylic acid derivatives of pyridine or salts thereof, or mixtures thereof, preferably from 0.01% to 4%, more preferably from 0.01% to 3% and most preferably from 0.02% to 2%.

Said complexing agents to be used herein are stable to hypochlorite and to high alkalinity. By "stable to hypochlorite and to high alkalinity" it is meant herein that the whiteness performance obtained with a composition of the present invention as made and the same composition after a period time of two months is the same. The method used to determine said whiteness performance is hereinafter described in the examples.

As a third essential feature, the compositions according to the present invention have a pH as is of from 11.5 to 14, preferably from 12 to 14. Suitable means to achieve such a pH value include potassium and sodium hydroxide.

The compositions of the present invention may further comprise a Ca/Mg precipitation system. Particularly useful to be used herein are silicate or carbonate salts, or mixtures thereof. The preferred alkali metal salts of silicate and carbonate are sodium silicate and sodium carbonate, both of which are commercially available, or mixtures thereof. Preferred compositions herein use a mixture of sodium carbonate and sodium silicate. Preferred compositions herein comprise up to 5% of by weight of the total composition of sodium carbonate, preferably from 0.2% to 5%, more preferably from 0.5% to 3%, and up to 3% by weight of the total composition of sodium silicate, preferably from 0.02% to 3%, more preferably from 0.04% to 3%. It has been found that said carbonate salts and silicate salts eliminate the metal impurities from the washing solution.

Indeed, silicate and carbonate salts bind with Ca and Mg present in the washing solution and precipitate as Ca/Mg silicate and Ca/Mg carbonate. This strongly reduces Ca and Mg content in solution, so that the action of the complexing agent of the present invention is even more specific.

Said silicate or carbonate salts allow also buffering of the pH of the present compositions throughout use. It is also suspected that the buffering of the hypochlorite compositions of the present invention reduces harshness to hands. Other precipitation/buffering systems could be conveniently used herein such as sodium borate and sodium sesquicarbonate.

The preferred compositions herein, which comprise both a complexing agent selected from the group of polycarboxylic derivatives of pyridine or salts thereof, or mixtures thereof, and a Ca/Mg precipitation system, i.e. carbonate salts together with silicate salts, provide improved fabric whiteness. By "improved fabric whiteness" it is meant herein that the whiteness on fabric achieved by using the hypochlorite compositions of the present invention is improved compared to the whiteness obtained by using hypochlorite compositions without any specific complexing agent as herein described. Indeed, it has been found that a synergistic effect on the whiteness performance is associated with the use of hypochlorite bleach compositions comprising said complexing agent or mixtures thereof together with said Ca/Mg precipitation system.

The compositions according to the present invention may further comprise optional ingredients including bleach-stable surfactants, organic or inorganic alkalis, perfumes, bleach-stable perfume solubilizer, pigments, dyes, optical brighteners or solvents.

The compositions according to the present invention are used in diluted form in laundry application. The expression "use in diluted form" herein includes dilution by the user, which occurs for instance in hand laundry applications, as well as dilution by other means, such as in a washing machine. Typical dilution levels are of from 0.5% to 20% for hand laundry application and 0.1% to 10% in a washing machine. Due to the Ca/Mg precipitation system used herein which is also a buffer system, the pH of a composition according to the present invention remains constant throughout use, i.e. the pH of a diluted composition is buffered from the moment the dilution is completed and until said hypochlorite bleaching composition is started to be rinsed away.

The present invention further encompasses a method of bleaching and washing fabrics wherein an aqueous hypochlorite composition having a pH of from 11.5 to 14 which comprises a complexing agent or mixtures thereof as defined herein is contacted with said fabrics. The compositions used in said method of bleaching and washing fabrics may further comprise a Ca/Mg precipitation system, preferably carbonate salts together with silicate salts. Said method according to the present invention improves the whiteness on fabrics, i.e. reduces yellowing due to the actions of heavy metal ions on fabrics.

More specifically, the method of bleaching fabrics according to the present invention comprises the steps of first contacting said fabrics with a composition according to the present invention in diluted form, then allowing said fabrics to remain in contact with said composition, for a period of time sufficient to bleach said fabrics, typically 5 to 60 minutes, preferably 5 to 30 minutes, then rinsing said fabrics in water to remove said composition. If said fabrics are to be washed, i.e. with a conventional composition comprising at least one surface active agent, it is preferred to perform the method herein before said fabrics are washed. Indeed, it has been observed that bleaching said fabrics with the compositions according to the present invention prior to washing them with a detergent composition provides superior whiteness and stain removal with less energy and detergent than if said fabrics are washed first, then bleached. Accordingly, said method according to the present invention further comprises a subsequent step where said fabrics are washed with a detergent composition comprising at least one surface active agent.

The present invention will be further illustrated by the following examples.

### Example 1

The following examples will illustrate the present invention. Said compositions are made by mixing the listed ingredients in the listed proportions:

| Compositions | 1 | 2 | 3 |
|---|---|---|---|
| Sodium hypochlorite | 5.0 | 5.0 | 5.0 |
| Sodium hydroxide | 0.7 | 0.7 | 0.7 |
| Sodium carbonate | 1.0 | 1.0 | 1.0 |
| Dipicolinic acid | 0.5 | 0.5 | / |
| Sodium silicate | 1.0 | / | / |
| pH | 13 | 13 | 13 |
| Water & minors | 100% | | |

Compositions 1 and 2 are representative of the present invention. Composition 1 differs from composition 2 in that composition 2 does not contain silicate salts. Composition 3, is a hypochlorite bleach composition taken as a reference.

A single tracer launderometer test was carried out. The test was performed in a stainless steel vessel. First 110 g of a composition of the present invention was diluted in 6 kg of tap water. From this solution samples of 500g were taken and heated at 40 °C. Then, the tracers (white cotton fabric and stained tracers) were added into these samples. The vessel was then kept under agitation for 20 minutes. At the end of the washing cycle the tracers were rinsed and dried. Then the tracers were evaluated by visual grading.

The table below lists the results obtained for compositions 1 and 2, versus composition 3.

| | Stain removal | Whiteness single cycle | Whiteness cumulative cycle |
|---|---|---|---|
| Composition 1 vs 3 | 0.5 | 1.3S | 1.6S |
| Composition 2 vs 3 | -0.3 | 0.2S | 1.0S |

Where:
- Results are expressed on a 0 to 3 performance scale.
- S identifies statistically reproducible results.
- Cumulative whiteness is measured with up to 8 repetitive washing cycles.

### Comments:

The data clearly shows the unexpected whiteness improvement delivered by the compositions of the present invention comprising dipicolinic acid as the complexing agent, especially after several wash cycles (compositions 1 and 2). Said data surprisingly shows the synergistic effect of the use of dipicolinic acid together with sodium silicate, on both the whiteness performances and the stain removal performance (composition 1).

Stability test carried out with the method hereinbefore described shows that compositions 1 and 2 are stable. For example, composition 1 undergoes only 17% loss of available chlorine after 7 days of storage at 50°C.

## Claims

1. A stable aqueous liquid bleaching composition having a pH of from 11.5 to 14 suitable to be used in diluted form, comprising from 0.1% to 10% by weight of the total composition, based on active chlorine, of an alkali metal hypochlorite characterized in that said composition further comprises from 0.01% to 5% by weight of a complexing agent or mixtures thereof selected from the group of polycarboxylic acid of pyridine, or salts thereof having one of the following formulas: 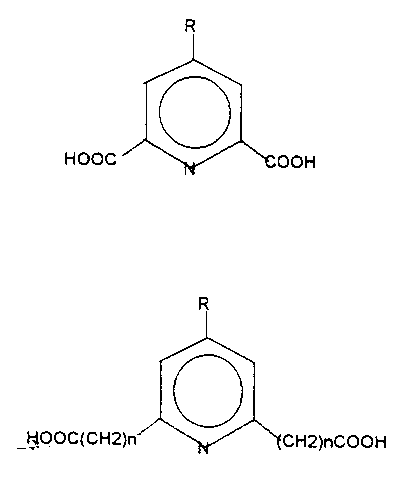 in which R is hydrogen, a halogen atom, a hydroxyl group, an amino group, a carboxylic group or a short-chain alkyl group (C1-C4) and n is 1 or 2, or mixtures thereof.

2. A method of bleaching or washing fabrics wherein an aqueous liquid bleaching composition having a pH of from 11.5 to 14, comprising an alkali metal hypochlorite and a complexing agent or mixtures thereof is diluted and contacted with said fabrics and then rinsed, whereby fabric whiteness is improved, characterized in that said complexing agent is selected from the group of polycarboxylic acid of pyridine, or salts thereof having one of the following formulas: 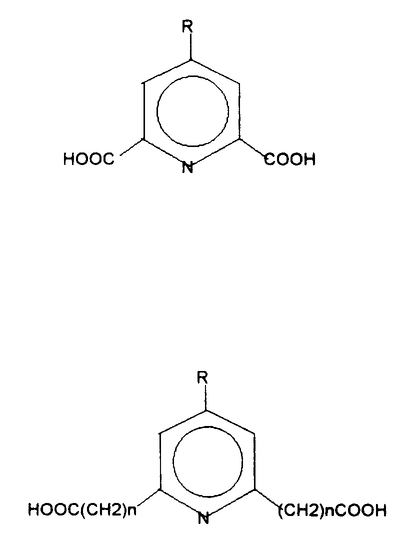 in which R is hydrogen, a halogen atom, a hydroxyl group, an amino group, a carboxylic group or a short-chain alkyl group (C1-C4) and n is 1 or 2 or mixtures thereof.

3. A method according to claim 2 wherein said composition comprises from 0.1% to 10% by weight of the total composition, based on active chlorine, of hypochlorite.

4. A method according to claims 2 or 3 wherein said composition comprises from 0.01% to 5% by weight of the total composition of said complexing agent or mixtures thereof.

5. A composition or a method according to any of the preceding claims wherein said composition comprises from 0.01% to 3% by weight of the total composition of said complexing agent or mixtures thereof, preferably from 0.02% to 2%.

6. A composition or a method according to any of the preceding claims wherein in said composition, said complexing agent is selected from the group of dipicolinic acid (2,6-pyridinedicarboxylic acid), derivatives thereof or mixtures thereof.

7. A composition or a method according to any of the preceding claim wherein said composition has a pH of from 12 to 14.

8. A composition or method according to any of the preceding claims wherein said composition further comprises a Ca/Mg precipitation system.

9. A composition or method according to claim 8 wherein said Ca/Mg precipitation system comprises carbonate salts, silicate salts or mixtures thereof.

10. A composition or method according to claim 9 wherein said composition comprises up to 5% by weight of the total composition of sodium carbonate, preferably from 0.2% to 5%, most preferably from 0.5% to 3% and up to 3% by weight of the total composition of sodium silicate, preferably from 0.02% to 3%, most preferably from 0.04% to 3%.

11. A method according to any of the claims 2 to 10 which further comprises a subsequent step where said fabrics are washed with a detergent composition comprising at least one surface active agent.

## Patentansprüche

1. Stabile, wäßrige, flüssige, bleichende Zusammensetzung mit einem pH-Wert von 11,5 bis 14, welche zur Anwendung in verdünnter Form geeignet ist, umfassend 0,1% bis 10%, bezogen auf das Gewicht der Gesamtzusammensetzung, basierend auf aktivem Chlor, von einem Alkalimetallhypochlorit, welche dadurch gekennzeichnet ist, daß die genannte Zusammensetzung ferner 0,01 Gew.-% bis 5 Gew.-% von einem Komplexierungsmittel oder von Gemischen hievon umfaßt, welche von der Gruppe der Pyridinpolycarbonsäuren oder Salzen hievon mit einer der folgenden Formeln: 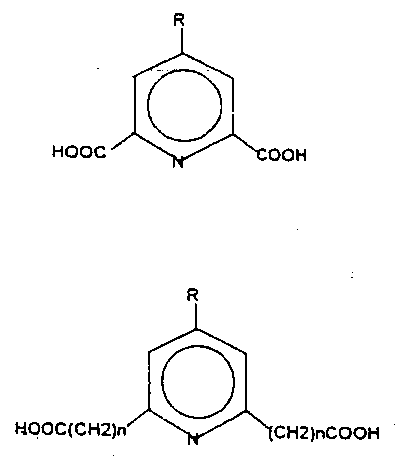 worin R Wasserstoff, ein Halogenatom, eine Hydroxylgruppe, eine Aminogruppe, eine Carbonsäuregruppe oder eine kurzkettige Alkylgruppe (C1-C4) darstellt und n 1 oder 2 beträgt, oder Gemischen hievon ausgewählt sind.

2. Verfahren zum Bleichen oder Waschen von Geweben, worin eine wäßrige, flüssige, bleichende Zusammensetzung mit einem pH-Wert von 11,5 bis 14, welche ein Alkalimetallhypochlorit und ein Komplexierungsmittel oder Gemische hievon umfaßt, verdünnt und mit den genannten Geweben in Kontakt gebracht und anschließend abgespült wird, wodurch die Weiße des Gewebes verbessert wird, dadurch gekennzeichnet, daß das Komplexierungsmittel von der Gruppe der Pyridinpolycarbonsäuren oder von Salzen hievon mit einer der folgenden Formeln 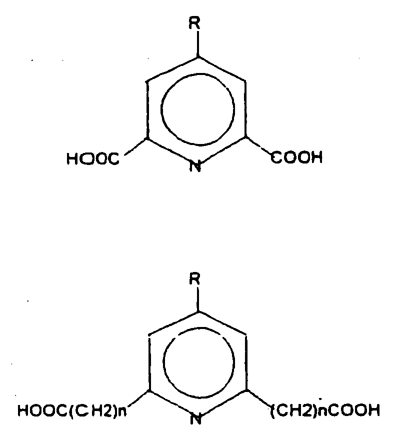 worin R für Wasserstoff, ein Halogenatom, eine Hydroxylgruppe, eine Aminogruppe, eine Carbonsäuregruppe oder eine kurzkettige Alkylgruppe (C1-C4) steht und n 1 oder 2 beträgt, oder Gemischen hievon ausgewählt ist.

3. Verfahren nach Anspruch 2, worin die genannte Zusammensetzung 0,1% bis 10%, bezogen auf das Gewicht der Gesamtzusammensetzung, basierend auf aktivem Chlor, an Hypochlorit umfaßt.

4. Verfahren nach Anspruch 2 oder 3, worin die genannte Zusammensetzung 0,01% bis 5%, bezogen auf das Gewicht der Gesamtzusammensetzung, von dem genannten Komplexierungsmittel oder von Gemischen hievon umfaßt.

5. Zusammensetzung oder Verfahren nach einem der vorstehenden Ansprüche, worin die genannte Zusammensetzung 0,01% bis 3%, bezogen auf das Gewicht der Gesamtzusammensetzung, von dem genannten Komplexierungsmittel oder von Gemischen hievon, vorzugsweise von 0,02% bis 2%, umfaßt.

6. Zusammensetzung oder Verfahren nach einem der vorstehenden Ansprüche, worin in der genannten Zusammensetzung das genannte Komplexierungsmittel von der Gruppe der Dipicolinsäure (2,6-Pyridindicarbonsäure), den Derivaten hievon oder Gemischen hievon ausgewählt ist.

7. Zusammensetzung oder Verfahren nach einem der vorstehenden Ansprüche, worin die genannte Zusammensetzung einen pH-Wert von 12 bis 14 besitzt.

8. Zusammensetzung oder Verfahren nach einem der vorstehenden Ansprüche, worin die genannte Zusammensetzung ferner ein System zur Ca/Mg-Fällung umfaßt.

9. Zusammensetzung oder Verfahren nach Anspruch 8, worin das genannte System zur Ca/Mg-Fällung Carbonatsalze, Silikatsalze oder Gemische hievon umfaßt.

10. Zusammensetzung oder Verfahren nach Anspruch 9, worin die genannte Zusammensetzung bis zu 5%, bezogen auf das Gewicht der Gesamtzusammensetzung, an Natriumcarbonat, vorzugsweise von 0,2% bis 5%, am stärksten bevorzugt von 0,5% bis 3%; und bis zu 3%, bezogen auf das Gewicht der Gesamtzusammensetzung, an Natriumsilikat, vorzugsweise von 0,02% bis 3%, am stärksten bevorzugt von 0,04% bis 3%, umfaßt.

11. Verfahren nach einem der Ansprüche 2 bis 10, welches ferner einen nachfolgenden Schritt umfaßt, worin die genannten Gewebe mit einer Detergenzzusammensetzung gewaschen werden, welche mindestens ein grenzflächenaktives Mittel umfaßt.

## Revendications

1. Composition de blanchiment liquide aqueuse, stable, ayant un pH de 11,5 à 14, convenant à une utilisation sous forme diluée, comprenant de 0,1% à 10%, en poids de la composition totale, rapporté au chlore actif, d'un hypochlorite de métal alcalin, caractérisée en ce que ladite composition comprend en outre de 0,01% à 5% en poids d'un agent complexant ou de mélanges d'agents complexants choisis dans le groupe constitué par les poly(acides carboxyliques) de pyridine, ou leurs sels, répondant à l'une des formules suivantes: 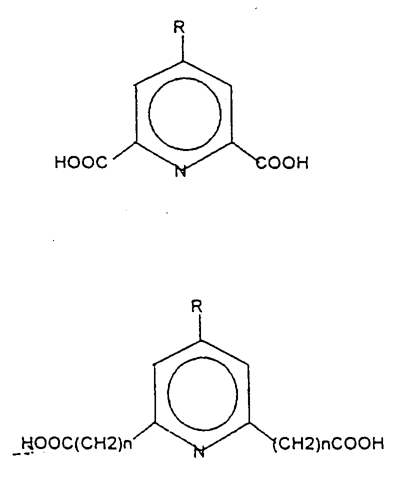 dans lesquelles R est un atome d'hydrogène, un atome d'halogène, un groupe hydroxyle, un groupe amino, un groupe carboxylique ou un groupe alkyle à chaîne courte (en C₁-C₄) et n vaut 1 ou 2, ou leurs mélanges.

2. Procédé de blanchiment ou de lavage du linge, dans lequel une composition de blanchiment liquide aqueuse ayant un pH de 11,5 à 14, comprenant un hypochlorite de métal alcalin et un agent complexant ou des mélanges d'agents complexants, est diluée et mise en contact avec ledit linge, puis rincée, ce qui améliore la blancheur du linge, caractérisé en ce que ledit agent complexant est choisi dans le groupe constitué par les poly(acides carboxyliques) de pyridine, ou leurs sels, répondant à l'une des formules suivantes: 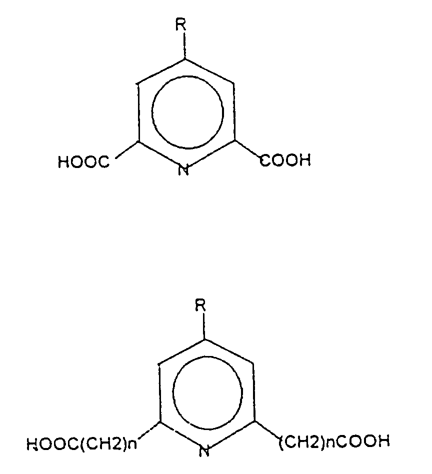 dans lesquelles R est un atome d'hydrogène, un atome d'halogène, un groupe hydroxyle, un groupe amino, un groupe carboxylique ou un groupe alkyle à chaîne courte (en C₁-C₄) et n vaut 1 ou 2, ou leurs mélanges.

3. Procédé selon la revendication 2, dans lequel ladite composition comprend de 0,1% à 10%, en poids de la composition totale, rapporté au chlore actif, d'hypochlorite.

4. Procédé selon les revendications 2 ou 3, dans lequel ladite composition comprend de 0,01% à 5%, en poids de la composition totale, dudit agent complexant ou desdits mélanges d'agents complexants.

5. Composition ou procédé selon l'une quelconque des revendications précédentes, dans laquelle (lequel) ladite composition comprend de 0,01% à 3%, en poids de la composition totale, dudit agent complexant ou desdits mélanges d'agents complexants, de préférence de 0,02% à 2%.

6. Composition ou procédé selon l'une quelconque des revendications précédentes, dans laquelle (lequel), dans ladite composition, ledit agent complexant est choisi dans le groupe constitué par l'acide dipicolinique (acide 2,6-pyridinedicarboxylique), ses dérivés ou des mélanges de ceux-ci.

7. Composition ou procédé selon l'une quelconque des revendications précédentes, dans laquelle (lequel) ladite composition possède un pH de 12 à 14.

8. Composition ou procédé selon l'une quelconque des revendications précédentes, dans laquelle (lequel) ladite composition comprend en outre un système de précipitation de Ca/Mg.

9. Composition ou procédé selon la revendication 8, dans laquelle (lequel) ledit système de précipitation de Ca/Mg comprend des sels carbonate, des sels silicate ou des mélanges de ceux-ci.

10. Composition ou procédé selon la revendication 9, dans laquelle (lequel) ladite composition comprend du carbonate de sodium à raison de jusqu'à 5% en poids de la composition totale, de préférence de 0,2% à 5%, mieux encore de 0,5% à 3%, et du silicate de sodium à raison de jusqu'à 3% en poids de la composition totale, de préférence de 0,02% à 3%, mieux encore de 0,04% à 3%.

11. Procédé selon l'une quelconque des revendications 2 à 10, qui comprend en outre une étape ultérieure dans laquelle ledit linge est lavé avec une composition détergente comprenant au moins un agent tensioactif.
